(19) Europäisches Patentamt

European Patent Office

Office européen des brevets

(11) **EP 0 719 093 B1**

(12) **EUROPEAN PATENT SPECIFICATION**

(45) Date of publication and mention
of the grant of the patent:
**08.03.2000 Bulletin 2000/10**

(51) Int. Cl.⁷: **A23G 3/30**

(86) International application number:
**PCT/US93/08730**

(21) Application number: **93922696.5**

(22) Date of filing: **15.09.1993**

(87) International publication number:
**WO 95/07622 (23.03.1995 Gazette 1995/13)**

(54) **HARD COATED CHEWING GUM WITH IMPROVED SHELF LIFE, WITH MIXED POLYOL COATINGS**

HARTBESCHICHTETER KAUGUMMI MIT VERBESSERTER BESTÄNDIGKEIT, MIT GEMISCHTEN-POLYOLEN SCHICHTEN

GOMME A MACHER A ENROBAGE DUR A BASE D'UN MELANGE DE POLYOLS ET PRESENTANT UNE DUREE DE CONSERVATION PROLONGEE

(84) Designated Contracting States:
**DE DK FR GB**

(43) Date of publication of application:
**03.07.1996 Bulletin 1996/27**

(73) Proprietor:
**WM. WRIGLEY JR. COMPANY**
**Chicago Illinois 60611 (US)**

(72) Inventors:
• **REED, Michael A.**
**Merrillville, IN 46410 (US)**
• **RICHEY, Lindell C.**
**Lake Zurich, IL 60047 (US)**
• **HOOK, Jeffrey S.**
**Berwyn, IL 60402 (US)**
• **YATKA, Robert J.**
**Orland Park, IL 60462 (US)**

• **TYRPIN, Henry T.**
**Midlothian, IL 60445 (US)**
• **BRODERICK, Kevin B.**
**Berwyn, IL 60402 (US)**
• **MEYERS, Marc A.**
**Naperville, IL 60565 (US)**

(74) Representative:
**Baverstock, Michael George Douglas et al**
**BOULT WADE TENNANT,**
**27 Furnival Street**
**London EC4A 1PQ (GB)**

(56) References cited:
**EP-A- 0 625 311** **US-A- 4 127 677**
**US-A- 4 681 766** **US-A- 4 792 453**
**US-A- 4 828 845**

**Description**

This invention relates to a hard-coated chewing gum with dual polyol coatings (i.e., coatings of two or more polyols) and a method of forming the gum.

Preferably the hard coating is composed of two or more polyols, having an improved coating quality and extended shelf life.

A chewing gum according to the invention is preferably in pellet form, having one or more sequentially added coats of polyols, preferably selected from the group consisting of lactitol, maltitol, hydrogenated isomaltulose and erythritol. The hard pellets are preferably prepared by coating a gum core with syrups of two or more polyols. The coated gum has improved coating quality and longer shelf life.

Chewing gums, including pellet chewing gums, are frequently enclosed with hard or soft coatings. Coatings provide an opportunity for the manufacturer to vary product characteristics such as taste, appearance and nutritional value. In recent years, efforts have been devoted to producing sugarless hard coatings for use in chewing gum. Sugarless coatings which have been investigated include coatings containing compounds such as xylitol, sorbitol, mannitol and hydrogenated starch hydrolysates.

Sugarless xylitol coated pellet gums have become very popular as products are being manufactured in Europe and Canada. The cost of xylitol is quite high, and partial replacement of the xylitol in the coating would be an advantage. Two polyols in the same coating solution cause problems in the coating process, but sequential coating of gum pellets with two solutions, each containing a polyol, one of which is xylitol, was found to be an acceptable process. U.S. Patent 5,270,061 published 14.12.93, taught sequential coating with a combination of hydrogenated isomaltulose and xylitol. Concurrently filed U.S. Patent 5,376,389, filed September 15, 1993, by Michael A. Reed, Lindell C. Richey, Jeffrey S. Hook and Philip G. Schnell, discloses hard-coated chewing gum coated successively with xylitol and another polyol, preferably lactitol or maltitol. EP 625 311 of Roquette frères describes coating a dragee with a liquid polyol and then a powdered form of the same polyol.

U.S. Patent 4,792,453, issued December 20, 1988, to Michael A. Reed, Mansukh M. Patel and Vasek J. Kures, discloses a chewing gum having a sugarless chewing gum center coated with a syrup containing hydrogenated isomaltulose. The sugarless center may include various constituents such as water, an insoluble gum base, a bulking agent, a softener, an artificial sweetener and a flavoring agent. The sugarless chewing gum center of the reference has a water content of less than about 2.5 weight percent, preferably less than about 1.5 weight percent and most preferably less than about 1.0 weight percent. The use of a center having a low water content, is intended to prevent or reduce the tendency of the gum center from being a water donor to the hard coating.

Sugarless gums coated with hydrogenated isomaltulose-containing syrup possess excellent appearance, taste, texture, mouth feel and other desirable properties of hard coated chewing gums. Also, it has been found that the relatively anhydrous gum center has the capability of pulling moisture from the hydrogenated isomaltulose-containing coating, causing the coating to exhibit superior hardness. This moisture-pulling from the gum center is attributable, in large part, to the use of glycerin as a softener in the gum center. The moisture-pulling effect is the most pronounced in hard coated chewing gums which contain moderate or relatively high amounts of glycerin in the chewing gum center, on the order of from 5 to 15 percent by weight of the chewing gum center.

The tendency of glycerin to pull moisture from the hydrogenated isomaltulose-containing coating can operate as a disadvantage in certain pellet-shaped hard coated chewing gums which, due to their shape, are difficult to isolate from a moisture-containing environment by packaging. For example, pellet gum which is shaped like pillows is difficult to protect from moisture because it is difficult to form a good quality, low or non-moisture permeable package which is suitable for these pellets.

Conventional panning procedures generally coat with sucrose, but recent advances in panning have allowed the use of other carbohydrate materials to be used in the place of sucrose. Some of these components include, but are not limited to, dextrose, maltose, xylitol, hydrogenated isomaltulose and other new polyols or a combination thereof. These materials may be blended with panning modifiers including, but not limited to, gum arabic, maltodextrins, corn syrup, gelatin, cellulose type materials like carboxymethyl cellulose or hydroxymethyl cellulose, starch and modified starches, vegetable gums like alginates, locust bean gum, guar gum and gum tragacanth, insoluble carbonates like calcium carbonate or magnesium carbonate and talc.

Hydrogenated isomaltulose is a monohydrate. If a hydrogenated isomaltulose-containing coating on a pellet gum becomes too dry, e.g. due to the presence of glycerin, the coating becomes more hygroscopic and absorbs moisture from the surrounding atmosphere. This continuous drying and absorption of moisture from the atmosphere reduces the shelf life of the pellet gum by causing the coating to soften and lose its desirable texture, appearance and mouth feel. Thus, the coating itself must be sufficiently shelf stable against moisture absorption so as not to allow the coating to deteriorate during its shelf life.

Commonly assigned U.S. Patent 5248508, filed March 23, 1992, by Michael A. Reed and Jeffrey S. Hook, entitled HARD COATED GUM WITH IMPROVED SHELF LIFE, discloses a chewing gum in pellet form which includes a center portion and an outer coating which contains hydrogenated isomaltulose.

Coating with xylitol is described in U.S. Patents 4,105,801, issued August 8, 1978, to Dogliotti; 4,127,677, issued November 28, 1978, to Fronczowski et al.; 4,146,653, issued March 27, 1979, to Mader et al.; 4,681,766, issued July 21, 1987, to Huzinec et al.; 4,786,511, issued November 22, 1988, also to Huzinec et al.; and 4,828,845, issued May 9, 1989, to Zamudio-Tena et al.

Patents and publications which discuss lactitol include U.S. Patents 3,973,050, issued August 3, 1976, to Hayashibara et al. (foods and drinks containing lactitol as a sweetener); 4,973,486, issued November 27, 1990, to Matsumoto et al. (formulation of lactitol-containing food); and 4,999,058, issued March 12, 1991, and 5,160,546, issued November 3, 1992, both to Kawashima et al. (production of lactitol trihydrate; use in chewing gum, column 6 of each patent); British Patent 1,253,300, Hayashibara, published November 10, 1971 (food materials containing lactitol); PCT published Patent Applications WO 90/06317, published June 14, 1990, and WO 92/16542, published October 1, 1992, both in the names of Heikkilä et al. (preparation of crystalline lactitol and use as sweetening agent; use in chewing gums mentioned at page 1, lines 10-11 of '317 and page 5, line 13 of '542); Ir. I.H. Blankers, PUPAC biochem by, LACTY[®] - A UNIQUE REDUCED CALORIE SWEETENER (October, 1992); CCA biochem b.v., Application Information, Hard Panned Chewing Gum (undated, 1 page); CCA biochem b.v., Application Information, Starting Point Formulation for a Lacty[®]-containing Chocolate and Chewing Gum (undated, 1 page); CCA biochem b.v., INTERNATIONAL APPROVAL SITUATION FOR LACTITOL (1988)(1 page); CCA biochem by, LACTY[®] / A NEW REDUCED CALORIE SWEETENER (undated)(page 5, use in chewing gum); CCA biochem b.v., Product Data, LACTY[®]-M (undated, 1 page); Ir. C.H. den Uijl, CCA biochem by, LACTY[®], PROPERTIES AND APPLICATIONS OF THIS NEW REDUCED CALORIE SWEETENER (1987); (anon.) Lacty[®], A New Bulk Sweetener, CONFECTIONERY PRODUCTION, p. 656 (September 1990); PURAC biochem, LACTY[®] CONTAINING CHEWING GUM (undated, 1 page); and PURAC biochem, LACTY[®] / A UNIQUE REDUCED CALORIE SWEETENER (undated)(page 5, use in chewing gum).

Patents and publications which discuss maltitol include U.S. Patents 4,556,565, issued December 2, 1985, to Arima et al. (sweetening compositions comprising maltitol); 4,623,543, issued November 18, 1986, to Motegi et al. (non-hygroscopic candies containing maltitol); 4,717,765, issued January 5, 1988, to Hirao et al. (production and use of maltitol anhydrous crystals; used in chewing gum in Example 12 in column 13); 4,840,797, issued June 20, 1989, to Boursier (maltitol coating); 4,933,188, issued June 12, 1990, to Cherukuri et al. (maltitol sweetening/bulking agent); 4,959,225, issued September 25, 1990, to Wong et al. (sweetening compositions comprising maltitol); and 5,120,551, issued June 9, 1992, to Yatka et al. (maltitol syrup); European Patent Publication 0,390,299, published October 10, 1990, in the names of Bakal et al. (foodstuffs containing maltitol); and Japanese Patent Publications 53 (1978) - 127,858, published November 8, 1978 in the names of Fukuda et al. (chewing gum which may include maltitol) and 67 (1992) - 287,659, published October 13, 1992, in the names of Shigeni et al. (low-calorie sweetener containing maltitol).

Hydrogenated isomaltulose is made and sold under the trademark PALATINIT[®] by Palatinit Sussungsmittel GmbH, Germany. Publications which discuss hydrogenated isomaltulose include PCT applications WO 89/03170, published April 20, 1989; WO 90/06061, published June 14, 1990; WO 90/07864, published July 26, 1990; WO 90/13994, published November 29, 1990; and WO 91/03147, published March 21, 1991, all in the names of Yatka et al., which disclose the use of Palatinit[®] hydrogenated isomaltulose coatings; Palatinit[®]-INFOPAC, Palatinit Sussungsmittel GmbH (synergistic effects appear when PALATINIT[®] hydrogenated isomaltulose is mixed with other sugar alcohols, for example, xylitol, sorbitol, or Lycasin, or when PALATINIT[®] hydrogenated isomaltulose is sweetened with sweetening agents (saccharin, cyclamate, aspartame); also formula for chewing gum containing PALATINIT[®] hydrogenated isomaltulose) and Palatinit[®] Coating Literature, Palatinit Sussungsmittel GmbH (coating dragées and panned goods with PALATINIT[®] hydrogenated isomaltulose).

Patents and publications which discuss erythritol include U.S. Patents 4,902,525, issued February 20, 1990, and 5,080,916, issued January 14, 1992, both to Kondou; Japanese Patent Publications 64 (1989) - 51,045, published February 27, 1989, in the name of Kondo; 1 (1989) - 225,458, published September 8, 1989, in the names of Katsuragi et al.; 2 (1990) - 104,259, published April 17, 1990, in the name of Ito; 4 (1992) - 287,658, published October 13, 1992, in the name of Kondo; and 4 (1992) - 287,659, published October 13, 1992, in the name of Shigeni et al. (sweetening compositions containing meso-erythritol); U.S. Patent 5,120,550, issued June 9, 1992, to Van der Schueren (chewing gum made with sweetening agent containing erythritol and a liquid sugar); and European Patent Applications 0,009,325, published April 2, 1980, in the name of Beerboom (reducing dental caries with sugarless chewing gum made with erythritol); 0,497,439, published August 5, 1992, in the names of Gonze et al. (sweetener employing spray-dried erythritol); 0,511,761, published November 4, 1992, in the names of Rapaille et al. (sweetening compositions containing erythritol); and 0,530,995, published March 10, 1993, in the names of Gonze et al. (lozenge containing sweetener which is all or partly erythritol or maltitol).

Other patents and publications which may be of interest include U.S. Patents 5,017,400, issued May 21, 1991, to Olinger et al. (non-cariogenic sweetener containing xylitol and maltitol; used in chewing gums, see Example I in columns 5-6); 5,135,761, issued August 4, 1992, to Dave et al. (coated chewing gum with emulsifier subcoat); 5,144,024, issued September 1, 1992, to Pepper et al. (shelf stable liquid xylitol compositions comprising polyols such as maltitol);

5,171,589, issued December 15, 1992, to Richey et al. (coated chewing gum polished with colored wax); and PCT published Patent Application WO 91/07100, published May 30, 1991, in the names of Oravainen et al. (hard candy containing xylitol and optionally maltitol or lactitol). See also PCT Patent Application published August 4, 1994 as PCT Application WO 94/16574 (chewing gum containing lactitol).

According to the present invention there is provided a dual composition hard coated chewing gum, comprising:

from 35 to 90 weight percent of a gum center, including a bulk portion, a chewing gum base and one or more flavouring agents; and

from 10 to 65 weight percent of an outer coating containing from 50 to 100%, by weight, of polyols selected from the group consisting of lactitol, maltitol, hydrogenated isomaltulose and erythritol, which comprises at least two sequential layers, each of from 50 to 100%, by weight, of a polyol selected from the group consisting of lactitol, maltitol, hydrogenated isomaltulose and erythritol;

the layers constituting an inner component of the outer coating and an outer component of the outer coating;

the layers of the inner component of the outer coating comprising a first polyol selected from the group consisting of lactitol, maltitol, hydrogenated isomaltulose and erythritol;

the layers of the outer component of the outer coating comprising a second polyol selected from the group consisting of lactitol, maltitol, hydrogenated isomaltulose and erythritol;

the polyol contained in the outer component of the outer coating differing from the polyol contained in the inner component of the outer coating.

According to a further aspect of the present invention there is provided a method of forming a dual composition hard coated chewing gum, comprising the steps of:

(a) forming a gum center including a bulk portion, a chewing gum base portion and one or more flavouring agents;

(b) forming a first polyol liquid coating syrup comprising solvent and from 50% to the point of saturation of a first polyol selected from the group consisting of lactitol, maltitol, hydrogenated isomaltulose and erythritol, by weight of the polyol liquid coating syrup;

(c) applying a plurality of coats of the first polyol liquid coating syrup to the gum center;

(d) forming a second polyol liquid coating syrup comprising solvent and from 50% to the point of saturation of a second polyol selected from the group consisting of lactitol, maltitol, hydrogenated isomaltulose and erythritol, by weight of the polyol liquid coating syrup, the composition of the second polyol liquid coating syrup differing from the composition of the first polyol liquid coating syrup;

(e) applying a plurality of coats of the second polyol liquid coating syrup to the gum center which is coated with the first polyol; and

(f) evaporating the solvent from each coat of the first and second polyol liquid coating syrups, prior to applying the next coat;

the number of coats applied in steps (c) and (e) being sufficient to provide a coating of from 10 to 65 weight percent of the total coated chewing gum product, constituting an inner component of the outer coating and an outer component of the outer coating;

the layers of the inner component of the outer coating comprising a first polyol selected from the group consisting of lactitol, maltitol, hydrogenated isomaltulose and erythritol;

the layers of the outer component of the outer coating comprising a second polyol selected from the group consisting of lactitol, maltitol, hydrogenated isomaltulose and erythritol;

the polyol contained in the outer component of the outer coating differing from the polyol contained in the inner component of the outer coating.

This invention is directed to a hard-coated chewing gum for example a pellet chewing gum whose pellet shape does not lend itself to packaging of a type that would protect the pellets from atmospheric moisture. The hard-coated chewing gum is coated successively (i.e., not simultaneously) with one or more sequentially added coats of polyols, preferably selected from the group consisting of lactitol, maltitol, hydrogenated isomaltulose and erythritol.

Chewing gum pellets are subject to constant exposure to atmospheric moisture during shelf storage. The present invention may provide a dual composition hard-coated chewing gum which gives improved coating quality and is shelf stable under these conditions.

It has been found that lactitol, maltitol, hydrogenated isomaltulose and erythritol (and other polyols) may be used in a manner similar to that in which hydrogenated isomaltulose is used with xylitol, according to the teaching in U.S. Patent 5,270,061.

The chewing gum of the invention includes a center portion and an dual composition outer coating. The outer coating coating consists of layers having at least two compositions, preferably selected from the group consisting of lactitol, maltitol, hydrogenated isomaltulose and erythritol.

The outer coating preferably contains from 50 to 100 weight percent of two polyols. The outer coating may also include sweeteners, whiteners, colorants, coating adjuvants and flavors.

The total weight of the coating constitutes from 10 to 65 weight percent of the coated chewing gum product.

Any conventional chewing gum center formulation may be used for the gum center. Preferably, however, the gum center is sugarless and includes sorbitol, mannitol, xylitol, lactitol, maltitol and/or hydrogenated starch hydrolyzate, and an aqueous sorbitol liquid. A number of preferred gum center formulas are set forth in the Examples. The gum center constitutes from 35 to 90 weight percent of the chewing gum product.

With the foregoing in mind, it is a feature and advantage of one embodiment of the invention to provide a dual composition hard coated chewing gum which retains its hardness, texture, appearance and mouth feel during shelf storage which involves constant exposure to the atmosphere.

It is also a feature and advantage of one embodiment of invention to provide a dual composition hard coated shelf-stable chewing gum which does not absorb significant quantities of moisture from the atmosphere.

It is also a feature and advantage of one embodiment of invention to provide a dual composition hard coated shelf-stable chewing gum which is suitable for pellet gum having pellet shapes which do not lend themselves readily to protective packaging with respect to the atmosphere.

It is also a feature and advantage of one embodiment of the invention to provide a method of making an improved dual composition hard coated shelf-stable chewing gum.

The foregoing and other features and advantages of the invention will become further apparent from the following detailed description. The detailed description is to be construed as illustrative rather than limitative, with the scope of the invention being defined by the appended claims and equivalents thereof.

In accordance with the invention, a dual composition hard coated chewing gum is provided which has a dual composition hard outer coating. Preferably the gum has a softer chewing gum center portion.

As noted in U.S. Patents 4,105,801; 4,127,677; 4,146,653; 4,681,766; 4,786,511; and 4,828,845, referred to above, xylitol, a polyol sugar substitute, can be used to coat various types of products, including chewing gum. Xylitol makes a quality coating for chewing gum, and a number of xylitol chewing gum products are currently on the market in the United States and Europe. Although the quality of product is good using a xylitol coating, the cost of xylitol is high.

It has been found that lactitol, maltitol, hydrogenated isomaltulose and erythritol are other polyol sugar substitutes that can be used in coating hard gum centers; and in fact, any edible polyol that can be crystallized to form a quality coating on a pellet may be used.

By combining polyol coatings in this invention, the cost of coating can be significantly reduced, while still maintaining some of the advantages of more expensive coatings. Also, by coating a chewing gum pellet with layers of different polyols, both polyols may give a significant shelf life improvement to the pellet gum. Moisture absorption of the pellet may be reduced, giving extended shelf life to the product in unfavorable storage conditions and packaging problems.

In one embodiment the invention involves first preparing a soft (by comparison to the coating which is to follow) chewing gum center portion, and forming it into gum pellets (typically having a pillow or round shape) by conventional means. The pelletized chewing gum centers are then coated with one or more sequentially applied layers of polyol coatings.

The coating may be accomplished in a traditional manner as disclosed by one of the aforementioned U.S. Patents 4,105,801; 4,127,677; 4,146,653; 4,681,766; 4,786,511; and 4,828,845. A preferred coating process, applicable to various polyols, is described below.

The preferred coating process uses solutions of the materials to be applied. Each coating solution contains one polyol, which should contain from about 50% polyol solids up to the saturation point of the polyol in the solvent, and preferably from 60 to 75 weight percent polyol solids. The syrups may comprise polyols dissolved in water or any other food quality solvent in an amount sufficient to yield a hard coating comprising from 50 to 100 weight percent polyol. More preferably, however, the syrup will comprise an amount of polyol sufficient to yield a hard coating comprising greater than about 90 weight percent polyol. Furthermore, the syrups and thus the layers of coating may contain minor quantities of other sugar substitutes such as sorbitol and mannitol in addition to the primary non-xylitol polyol.

Each coating step adds a small amount of polyol, depending on various factors including chiefly the concentration of the polyol in the coating syrup. Each individual coating step adds roughly 1% to the then-current weight of the pellet being coated.

The total amount of these polyol coatings may be from 10% to 65% by weight of the product obtained by the series of coatings, i.e., after the last coating step, the product contains from 10% to 65% polyol coating and from 35% to a 90% gum center, by weight of the total product. Reaching this weight of coating will typically require from 10 to 65 individual coating steps. A preferred product contains from 20% to 50% by weight of combined polyol coating and from 50 to 80% gum center.

It is preferred that the polyols in the polyol coatings be selected from the group consisting of lactitol, maltitol, hydrogenated isomaltulose and erythritol. It is more highly preferred that layers of a polyol selected from the group consisting of lactitol, maltitol and hydrogenated isomaltulose be applied first, and then coatings of erythritol be applied in a similar fashion over the lactitol, maltitol or hydrogenated isomaltulose coatings.

The ratio of the first polyol to the second polyol in the coatings may vary widely, but the ratio is preferably about 1:1.

The dual composition hard outer coating includes layers of at least two polyol coatings. Each of the two components of the dual composition hard outer coating may be present as a single layer or as a plurality of layers. The dual composition hard coating may be present in any thickness or amount which is commercially acceptable.

Lactitol and maltitol, preferred for use in the present invention, are both polyols of the empirical formula $C_{12}H_{24}O_{11}$, and are reduced (hydrogenated) lactose and maltose, respectively. Lactitol and maltitol differ from the disaccharide sugars lactose and maltose in that one of the component sugars is reduced to a linear polyol structure, rather than the ring structure of the disaccharide sugar. Formal chemical names for lactitol and maltitol are 4-O-(β-galactosyl)-D-glucitol and 4-O-(α-glucoparanosyl)-D-glucitol, respectively. The structural formula for lactitol is given in British Patent 1,253,300, at page 2; in Ir. I.H. Blankers, PURAC biochem by, LACTY® - A UNIQUE REDUCED CALORIE SWEETENER (October, 1992), at pages 2 and 6; and elsewhere in the LACTY® trade literature. The structural formula for maltitol is given in U.S. Patent 4,933,188, issued June 12, 1990, to Cherukuri et al., in column 5, and in European Patent Publication 0,390,299, published October 10, 1990, in the names of Bakal et al., at page 3.

Lactitol is available from Purac America, Inc. in the United States, or from PURAC biochem in the Netherlands, under the trademark LACTY®. Maltitol is available from Roquette Corporation. Both materials are obtained in a crystalline powder form and since they are very soluble in water, can form concentrated coating solutions of 60-80% solids at high temperature.

Erythritol is a tetrahydic polyol or sugar alcohol, having the empirical formula $C_4H_{10}O_4$ and the structural formula $CH_2COH-CHOH-CHOH-CH_2QH$. It can be obtained by fermenting glucose with specially selected yeast strains in appropriate aqueous nutrient media, or by treating an aqueous alkali carbonate solution of 2-buten-1,4-diol with chlorine, and saponifying the resulting chlorohydrin. Erythritol is available from Mitsubishi Kasei America of White Plains, New York; and from Mitsubishi Kasei Corp., outside the United States, as a powder with a melting point of about 119°C. It has a sweetness level of about 75% of that of sucrose, and has good storage stability. Syrups of erythritol may be formed at room temperature at concentrations below 40%, its solubility limit at room temperature. At higher temperatures, syrups of higher concentrations may be formed. Erythritol is not approved for use in human food products or chewing gum in the United States. A GRAS affirmation petition for erythritol as a human food ingredient is being prepared by Mitsubishi Kasei Corp. Erythritol does not contribute to dental caries, does not cause gastric distress, and does not contribute significantly to caloric intake.

Either or both components of the coating may also contain other ingredients such as flavoring agents, artificial sweeteners and dispersing agents, coloring agents, film formers and binding agents. Flavoring agents contemplated by the present invention include those commonly known in the art such as essential oils, synthetic flavors or mixtures thereof, including but not limited to oils derived from plants and fruits such as citrus oils, fruit essences, peppermint oil, spearmint oil, other mint oils, clove oil, oil of wintergreen, anise and the like. The flavoring agents may be added to the coating syrup in an amount such that the coating will contain from 0.2 to 1.2 weight percent flavoring agent and preferably from 0.7 to 1.0 weight percent flavoring agent.

Artificial sweeteners contemplated for use in the coating include but are not limited to synthetic substances, saccharin, thaumatin, alitame, saccharin salts, aspartame, sucralose® and acesulfame-K. The artificial sweetener may be added to the coating syrup in an amount such that the coating will contain from 0.05 to 0.3 weight percent and preferably from 0.10 to 0.15 weight percent artificial sweetener.

Dispersing agents are often added to syrup coatings for the purpose of whitening and tack reduction. Dispersing agents contemplated by the present invention to be employed in the coating syrup include titanium dioxide, talc, or any other antistick compound. Titanium dioxide is a presently preferred dispersing agent of the present invention. The dispersing agent may be added to the coating syrup in amounts such that the coating will contain from 0.1 to 1.0 weight percent and preferably from 0.3 to 0.6 weight percent of the agent.

Coloring agents are preferably added directly to the syrup in the dye or lake form. Coloring agents contemplated by the present invention include food quality dyes. Film formers preferably added to the syrup, include methyl cellulose, gelatins, hydroxypropyl cellulose, ethyl cellulose, hydroxyethyl cellulose, carboxymethyl cellulose and the like and combinations thereof. Binding agents may be added either as an initial coating on the chewing gum center or may be added directly into the syrup. Binding agents contemplated by the present invention include gum arabic, alginate, cellulosics, vegetable gums and the like.

The softer chewing gum center includes a water soluble bulk portion, a generally water insoluble chewing gum base and one or more flavoring agents. The water soluble portion dissipates over a period of time during chewing, while the gum base portion remains in the mouth throughout the chewing process.

The insoluble gum base generally includes elastomers, resins, fats, oils, waxes, softeners and inorganic fillers. The elastomers may include polyisobutylene, isobutylene-isoprene copolymer, styrene butadiene rubber and natural latexes such as chicle. The resins may include polyvinyl acetate, ester gums and terpene resins. Low molecular weight polyvinyl acetate is a preferred resin. Fats and oils may include animal fats such as lard and tallow, vegetable oils such as soybean and cottonseed oils, hydrogenated and partially hydrogenated vegetable oils and cocoa butter. Commonly used waxes include petroleum waxes such as paraffin and microcrystalline wax, natural waxes such as beeswax, candelilla, carnauba and polyethylene wax. The present invention contemplates the use of any commercially acceptable chewing gum base.

The gum base typically also includes a filler component such as calcium carbonate, magnesium carbonate, talc, dicalcium phosphate and the like; softeners, including glycerol monostearate and glycerol triacetate; and optional ingredients such as antioxidants, colors and emulsifiers. The gum base constitutes from 5 to 95% by weight of the chewing gum center, more typically from 10 to 50% by weight of the chewing gum center, and most commonly from 25 to 35% by weight of the chewing gum center.

The water soluble portion of the chewing gum center may include softeners, bulk sweeteners, high intensity sweeteners, flavoring agents and combinations thereof. Softeners such as glycerin are added to the chewing gum center in order to optimize the chewability and mouth feel of the gum. The softeners, which are also known as plasticizers or plasticizing agents, constitute from 0.5 to 15% by weight of the chewing gum center.

Aqueous sweetener solutions such as those containing sorbitol, hydrogenated starch hydrolysates, syrups of xylitol, lactitol, maltitol, hydrogenated isomaltulose and other polyols, corn syrup and combinations thereof, may also be used as softeners and binding agents in the chewing gum center.

Bulk sweeteners constitute from 5 to 90% by weight of the chewing gum center, more typically from 20 to 80% by weight of the chewing gum center and most commonly from 30 to 60% by weight of the chewing gum center. Bulk sweeteners preferably include sugarless sweeteners and components. Sugarless sweeteners include components with sweetening characteristics but are devoid of the commonly known sugars. Sugarless sweeteners include but are not limited to sugar alcohols such as sorbitol, mannitol, xylitol, hydrogenated starch hydrolysates, lactitol, maltitol, hydrogenated isomaltulose, erythritol and the like, alone or in combination.

High intensity sweeteners may also be present and are commonly used with sugarless sweeteners. When used, high intensity sweeteners typically constitute from 0.001 to 5% by weight of the chewing gum center, preferably from 0.01 to 1% by weight of the chewing gum center. Typically, high intensity sweeteners are at least 20 times sweeter than sucrose. These may include but are not limited to sucralose[®] aspartame, salts of acesulfame, alitame, saccharin and its salts, cyclamic acid and its salts, glycyrrhizin, dihydrochalcones, thaumatin, monellin and the like, alone or in combination.

Combinations of sugar and/or sugarless sweeteners may be used in the chewing gum center. The sweetener may also function in the chewing gum in whole or in part as a water soluble bulking agent. The softener may also provide additional sweetness.

The flavoring agent should generally be present an the chewing gum center in an amount within the range of from 0.1 to 15% by weight of the chewing gum center, preferably from 0.2 to 5% by weight of the chewing gum center, most preferably from 0.5 to 3% by weight of the chewing gum center. Flavoring agents may include essential oils, synthetic flavors or mixtures thereof including but not limited to oils derived from plants and fruits such as citrus oils, fruit essences, peppermint oil, spearmint oil, other mint oils, clove oil, oil of wintergreen, anise and the like. Artificial flavoring agents and components may also be used in the chewing gum center. Natural and artificial flavoring agents may be combined in any sensorially acceptable fashion.

Optional ingredients such as colors, emulsifiers, pharmaceutical agents and additional flavoring agents may also be included in chewing gum center.

The chewing gum center is generally manufactured by sequentially adding the various chewing gum ingredients to any commercially available mixer known in the art. After the ingredients have been thoroughly mixed, the gum mass is discharged from the mixer and shaped into the desired form such as by extruding into chunks, or casting into pellets.

Generally, the ingredients are mixed by first melting the gum base and adding it to the running mixer. The gum base may alternatively be melted in the mixer. Color and emulsifiers can be added at this time.

A softener such as liquid sorbitol solution can be added next along with syrup and part of the bulk portion. Further parts of the bulk portion may then be added to the mixer. The flavoring agents are typically added with the final part of the bulk portion. The entire mixing process typically takes from five to fifteen minutes, although longer mixing times are sometimes required. Those skilled in the art will recognize that variations of this mixing procedure, or other mixing procedures, may be followed.

After the chewing gum center has been manufactured and shaped, the polyol-containing coatings can be applied. Pellet or ball gum is prepared as conventional chewing gum, but formed into pellets that are pillow-shaped or ball-shaped. The pellets or balls can then be sugar coated or panned by conventional panning techniques to make a unique, sugar-coated pellet gum. The polyols used in the coatings (lactitol, maltitol, hydrogenated isomaltulose or erythritol) are very stable and highly water soluble, and can be easily added to water to make a solution prepared for panning.

Lactitol, maltitol, hydrogenated isomaltulose or erythritol may be combined with other polyols, or used alone in solution as the coating on pellet gum. Lactitol, maltitol, hydrogenated isomaltulose or erythritol can also be added as a powder blended with other powders often used in some types of conventional panning procedures. Using lactitol, maltitol, hydrogenated isomaltulose or erythritol sweetener isolates the sweetener from other gum ingredients and may modify its release rate in chewing gum. Lactitol, maltitol, hydrogenated isomaltulose or erythritol can also be used as panning modifiers with other panning materials to improve product quality. Antitack agents may also be added as panning modifiers, which allow the use of a variety of carbohydrates and sugar alcohols to be used in the development of new panned or coated gum products.

The coating is initially present as a liquid syrup which contains from 30 to 80 or 85 weight percent of the coating ingredients previously described herein, and from 15 or 20 to 70 weight percent of a solvent such as water. In general, the hard coating process is carried out in a rotating pan. Sugarless gum center tablets to be coated are placed into the rotating pan to form a moving mass.

The material or syrup which will eventually form the hard coating is applied or distributed over the gum center tablets. Flavoring agents may be added before, during and after applying the syrup to the gum centers. Once the coating has dried to form a hard surface, additional syrup additions can be made to produce a plurality of coatings or multiple layers of hard coating.

In the hard coating panning procedure, syrup is added to the gum center tablets at a temperature range of from 38°C (100°F) to 93°C (200°F) Preferably, the syrup temperature is from 66°C (150°F) to 77°C (170°F). Most preferably, the syrup temperature should be maintained at about 70°C (158°F) throughout the process in order to prevent the polyol in the syrup from crystallizing. The syrup may be mixed with, sprayed upon, poured over, or added to the gum center tablets in any way known to those skilled in the art.

Each component of the coating on the gum center tablets may be applied in a single hard layer or in a plurality of hard layers. In general, a plurality of layers is obtained by applying single coats, allowing the layers to dry, and then repeating the process. The amount of solids added by each coating step depends chiefly on the concentration of the coating syrup. Any number of coats may be applied to the gum center tablet. Preferably, no more than about 75 coats are applied to the gum center tablets. More preferably, less than about 60 coats are applied and most preferably, from 30 to 60 coats are applied. In any event, the present invention contemplates applying an amount of syrup sufficient to yield a dual composition hard coated chewing gum product containing from 10 to 65 weight percent coating. Preferably, the final product will contain from 20 to 50 weight percent hard coating.

Those skilled in the art will recognize that in order to obtain a plurality of hard coated layers, a plurality of premeasured aliquots of coating syrup may be applied to the gum center tablets. It is contemplated, however, that the volume of aliquots of syrup applied to the gum center tablets may vary throughout the coating procedure.

The present invention contemplates that a flavoring agent may be added to the syrup, or applied to the gum center tablets while the syrup coating is drying or after the coating has dried. Furthermore, the flavoring agent may be applied anywhere within the sequence of coats, for example, after the third, twelfth, eighteenth, etc., coats.

Once a coating of syrup is applied to the gum center tablets, the present invention contemplates drying the wet syrup in an inert medium. A preferred drying medium comprises air. Preferably, forced drying air contacts the wet syrup coating in a temperature range of from 27°C (80°F) to 46°C (115°F). More preferably, the drying air is in the temperature range of from 32°C (90°F) to 41°C(105°F). The invention also contemplates that the drying air possess a relative humidity of less than about 15 percent. Preferably, the relative humidity of the drying air is less than about 8 percent.

The drying air may be passed over and admixed with the syrup coated gum centers in any way commonly known in the art. Preferably, the drying air is blown over and around the syrup coated gum center at a flow rate, for large scale operations, of about 79.3 m$^3$ (2800 cubic feet) per minute. If lower quantities of material are being processed, or if smaller equipment is used, lower flow rates would be used. If a flavoring agent is applied after a syrup coating has been dried, the present invention contemplates drying the flavoring agent with or without the use of a drying medium.

A wide range of changes and modifications to the embodiments of the invention described above will be apparent to persons skilled in the art. For example, while the invention is described with respect to hard-coated chewing gum, it will be appreciated that the dual coating process is applicable to coating other food products, such as candies, in which a dual polyol coating would have utility.

## EXAMPLES

The invention will now be illustrated with Examples, which are not to be construed as imposing limitations on the invention.

Three gum center compositions, having the formulas in Table I, can be made on production scale equipment and can be used in various coating tests.

TABLE I

|  | Center Formula A | Center Formula B | Center Formula C |
|---|---|---|---|
| Sorbitol | 48.06 | 43.64 | 44.06 |
| Base | 33.0 | 33.0 | 33.0 |
| Calcium Carbonate | 13.0 | 13.0 | 13.0 |
| Glycerin | 4.0 | 6.5 | 8.0 |
| Peppermint Flavor | 1.8 | 2.5 | 1.8 |
| Water | --- | 0.8 | --- |
| Color | --- | 0.2 | --- |
| Encapsulated Aspartame | 0.14 | 0.36 | 0.14 |
| TOTAL | 100.00 | 100.00 | 100.00 |

In addition, gum center formulations in Table II without calcium carbonate can be used in coating tests.

TABLE II

|  | Center Formula D | Center Formula B | Center Formula F |
|---|---|---|---|
| Sorbitol | 48.9 | 48.9 | 48.9 |
| Base | 33.0 | 33.0 | 33.0 |
| Mannitol | 12.0 | 10.0 | 8.0 |
| Glycerin | 4.0 | 6.0 | 8.0 |
| Peppermint Flavor | 1.8 | 1.8 | 1.8 |
| Encapsulated Aspartame | 0.3 | 0.3 | 0.3 |
| TOTAL | 100.00 | 100.00 | 100.00 |

Gum center formulations can also be made using hydrogenated starch hydrolyzates (HSH) that may be evaporated to 80% solids or may also be coevaporated with glycerin to give various sugar-free center formulas as in Table III.

TABLE III

|  | Center Formula G | Center Formula H | Center Formula I | Center Formula J |
|---|---|---|---|---|
| Sorbitol | 44.3 | 42.3 | 40.9 | 40.9 |
| Base | 30.0 | 30.0 | 33.0 | 33.0 |
| Mannitol | 8.0 | 12.0 | 10.0 | 8.0 |
| HSH | 14.0 | 10.0 | --- | --- |
| Glycerin | 2.0 | 4.0 | 4.0 | 3.0 |
| Peppermint Flavor | 1.5 | 1.5 | 1.8 | 1.8 |
| Encapsulated Aspartame | 0.2 | 0.2 | 0.3 | 0.3 |
| Coevaporated HSH/Glycerin | --- | --- | 10.0 | 13.0 |
| TOTAL | 100.00 | 100.00 | 100.00 | 100.00 |

The gum center formulations in Table I and II are typical of anhydrous gum formulations having less than about 1% moisture. In Table III using HSH and glycerin, formulations contain more than 1% moisture.

Gum center formulations that contain greater than 1% moisture may use liquid sorbitol (70% solids) to give center formulations that are less hygroscopic than the previous formulations in Table I, II and III. Formulas in Table IV may also be used as needed.

TABLE IV

|  | Center Formula K | Center Formula L | Center Formula M | Center Formula N | Center Formula O |
|---|---|---|---|---|---|
| Sorbitol | 50.4 | 47.4 | 42.9 | 41.9 | 41.9 |
| Base | 27.0 | 27.0 | 35.0 | 35.0 | 35.0 |
| Sorbitol Liquid | 9.0 | 12.0 | 10.0 | 14.0 | 10.0 |
| Mannitol | 10.0 | 12.0 | 10.0 | 6.0 | --- |
| Glycerin | 2.0 | --- | --- | 1.0 | --- |
| Peppermint Flavor | 1.4 | 1.4 | 1.8 | 1.8 | 1.8 |
| Encapsulated Aspartame | 0.2 | 0.2 | 0.3 | 0.3 | 0.3 |
| Calcium Carbonate | --- | --- | --- | --- | 11.0 |
| TOTAL | 100.00 | 100.00 | 100.00 | 100.00 | 100.00 |

Center formulations may also include the other polyols that are used in the coating. Various levels of lactitol, maltitol, hydrogenated isomaltulose and erythritol may be used in the center and may actually be the major component in the center formula as in Table V.

TABLE V

|  | Center Formula P | Center Formula O | Center Formula R | Center Formula S |
|---|---|---|---|---|
| Base | 30.0 | 30.0 | 30.0 | 30.0 |
| Lactitol | 55.3 | --- | --- | --- |
| Maltitol | --- | 58.3 | --- | --- |
| Hydrogenated Isomaltulose | --- | --- | 55.3 | --- |
| Erythritol | --- | --- | --- | 66.3 |
| HSH | 8.0 | 8.0 | 8.0 | 2.0 |
| Glycerin | 5.0 | 2.0 | 5.0 | --- |
| Peppermint Flavor | 1.5 | 1.5 | 1.5 | 1.5 |
| Encapsulated Aspartame | 0.2 | 0.2 | 0.2 | 0.2 |
| TOTAL | 100.00 | 100.00 | 100.00 | 100.00 |

The center formulas in Tables I through V may be the core for any of the following coating examples using the combination of polyols of lactitol, maltitol, hydrogenated isomaltulose and erythritol.

EXAMPLE 1 - HYDROGENATED ISOMALTULOSE AND ERYTHRITOL COATING

Using any center formula from Tables I through V, pellets can be coated with an erythritol syrup and a hydrogenated isomaltulose syrup which provide a coating of 48.5% hydrogenated isomaltulose, 46% erythritol, 3.4% gum arabic, 1.2% peppermint flavor and 0.9% titanium dioxide, then polished with carnauba wax.

The first coating solution (used for the first approximately 20 coats) can contain a 75% hydrogenated isomaltulose solids syrup, gum arabic as a 33% aqueous solution, and titanium dioxide. The second coating syrup can contain an 75% erythritol solids syrup, gum arabic as a 33% aqueous solution, and titanium dioxide. The second coating solution (used for the last approximately 20 coats) can contain twice the amount of gum arabic as the first and substitute erythritol for hydrogenated isomaltulose, but may otherwise be the same as the first solution. About 40 coats in total can be applied, with half the flavor added at the 5th coat, and the other half at the 10th coat. The product will be 34.5% hydrogenated isomaltulose and erythritol coating, and 65.5% gum center.

### EXAMPLE 2 - LACTITOL AND ERYTHRITOL COATINGS

Using any center formula from Tables I through V, 2500 grams of pellets can be coated with lactitol in the first coating syrup, then erythritol in the second coating syrup. For the first coating syrup, a coating solution of 1200 grams of lactitol, 66 grams of gum arabic, 10 grams $TiO_2$ and 933 grams of water can be prepared, heated to boiling, and held at 71°C (160°F) During coating, half of 5.5 grams of peppermint flavor can be added to each of the 12th and 20th coats. With the initial piece weight at 1.04 grams, pellets can be coated with lactitol to a piece weight of 1.33 grams for a product which is 21.8% lactitol coating and 78.2% gum center. For the second coating solution, an erythritol coating solution can be prepared by mixing 420 grams of erythritol, 38 grams of gum arabic, 10 grams $TiO_2$ and 236 grams of water. A 1000 gram quantity of the lactitol-coated gum can then be coated with the erythritol coating solution to a piece weight of 1.58 grams, for a product which is 34.2% lactitol and erythritol coating, and 65.8% gum center.

### EXAMPLE 3 - MALTITOL AND ERYTHRITOL COATINGS

Using any center formula from Tables I through V, 1500 grams of pellets can be coated with maltitol in the first coating syrup, then erythritol in the second coating syrup. A coating solution of 1200 grams of maltitol, 66 grams of gum arabic and 933 grams of water can be prepared, heated to boiling and held at 71°C (160°F). During coating, half of 6.6 grams of flavor is added to each of the 9th and 12th coats. With the initial piece weight of 0.94 grams, pellets can be coated with maltitol to a piece weight of 1.18 grams, for a product which is 20.3% maltitol coating and 79.7% gum center. The erythritol coating solution can be prepared as in Example 2 and used to overcoat 750 grams of the maltitol coated pellet to a piece weight of 1.44 grams, for a product which is 34.7% maltitol and erythritol coating, and 65.3% gum center.

### EXAMPLE 4 - HYDROGENATED ISOMALTULOSE AND MALTITOL COATING

Using any center formula from Tables I through V, pellets can be coated with a maltitol syrup and a hydrogenated isomaltulose syrup which provided a coating of 48% hydrogenated isomaltulose, 48% maltitol, 1.9% gum arabic, 1.2% peppermint flavor and 0.9% titanium dioxide, then polished with carnauba wax.

The first coating solution (used for the first approximately 20 coats) can contain a 75% hydrogenated isomaltulose solids syrup, gum arabic as a 33% aqueous solution, and titanium dioxide. The second coating syrup can contain an 70% maltitol solids syrup, gum arabic as a 33% aqueous solution, and titanium dioxide. The second coating solution (used for the last approximately 20 coats) can contain the same amount of gum arabic as the first and substitute maltitol for hydrogenated isomaltulose, as indicated, but is otherwise the same as the first solution. About 40 coats in total can be applied, with half the flavor added at the 5th coat, and the other half at the 10th coat. The product will be 34.5% hydrogenated isomaltulose and maltitol coating, and 65.5% gum center.

### EXAMPLE 5 - LACTITOL AND HYDROGENATED ISOMALTULOSE COATINGS

Using any center formula from Tables I through V. 2500 grams of pellets can be coated with lactitol in the first coating syrup, then hydrogenated isomaltulose in the second coating syrup. For the first coating syrup a coating solution of 1200 grams of lactitol, 66 grams of gum arabic, 10 grams $TiO_2$ and 933 grams of water an be prepared and heated to boiling, and held at 71°C (160°F). During coating, half of 5.5 grams of peppermint flavor can be added to each of the 12th and 20th coats. With the initial piece weight at 1.04 grams, pellets can be coated with lactitol to a piece weight of 1.33 grams for a product which is 21.8% lactitol coating and 78.2% gum center. For the second coating solution, a hydrogenated isomaltulose coating solution can be prepared by mixing 420 grams of hydrogenated isomaltulose, 10 grams of gum arabic, 10 grams $TiO_2$ and 236 grams of water. A 1000 gram quantity of the lactitol-coated gum can then be coated with the hydrogenated isomaltulose coating solution to a piece weight of 1.58 grams, for a product which is 34.2% lactitol and hydrogenated isomaltulose coating, and 65.8% gum center.

EXAMPLE 6 - MALTITOL AND LACTITOL COATINGS

Using any center formula from Tables I through V, 1500 grams of pellets can be coated with maltitol in the first coating syrup, then lactitol in the second coating syrup. A coating solution of 1200 grams of maltitol, 66 grams of gum arabic and 933 grams of water can be prepared and heated to boiling and held at 71°C (160°F). During coating, half of 6.6 grams of flavor can be added to each of the 9th and 12th coats. With the initial piece weight of 0.94 grams, pellets can be coated with maltitol to a piece weight of 1.18 grams, for a product which is 20.3% maltitol coating and 79.7 gum center. The lactitol coating solution can be prepared by mixing 1200 grams of lactitol, 20 grams of gum arabic, 10 grams $TiO_2$ and 900 grams of water and used to coat 1500 grams of the maltitol coated pellet to a piece weight of 1.44 grams for a product which is 34.7% maltitol and lactitol coating, and 65.3% center.

EXAMPLE 7 - ERYTHRITOL AND MALTITOL COATINGS

Using any center formula from Tables I through V, 1000 grams of pellet can be coated by first applying 20 applications of an erythritol solution containing 900 grams of erythritol, 66 grams of gum arabic, 10 grams of $TiO_2$ and 433 grams in the water. With the initial piece weight of 0.94 grams, pellets can be coated with erythritol to a piece weight of 1.18 grams, for a product which is 20.3% erythritol coating and 79.7% center. The maltitol coating solution can be prepared by mixing 1200 grams of maltitol, 20 grams of gum arabic, 10 grams of $TiO_2$ and 840 grams of water. A 1000 gram quantity of erythritol-coated gum can then be coated with the maltitol coating solution to a piece weight of 1.44 grams, for a product which is 34.7% erythritol and maltitol coating, and 65.3% center.

It will be appreciated that the addition of some other ingredients, process steps, materials or components not specifically included will have an adverse impact on the present invention. The best mode of the invention may therefore exclude ingredients, process steps, materials or components other than those listed above for inclusion or use in the invention.

**Claims**

1. A dual composition hard coated chewing gum, comprising:

   from 35 to 90 weight percent of a gum center, including a bulk portion, a chewing gum base and one or more flavoring agents; and
   from 10 to 65 weight percent of an outer coating containing from 50 to 100%, by weight, of polyols selected from the group consisting of lactitol, maltitol, hydrogenated isomaltulose and erythritol, which comprises at least two sequential layers, each of from 50 to 100%, by weight, of a polyol selected from the group consisting of lactitol, maltitol, hydrogenated isomaltulose and erythritol;
   the layers constituting an inner component of the outer coating and an outer component of the outer coating;
   the layers of the inner component of the outer coating comprising a first polyol selected from the group consisting of lactitol, maltitol, hydrogenated isomaltulose and erythritol;
   the layers of the outer component of the outer coating comprising a second polyol selected from the group consisting of lactitol, maltitol, hydrogenated isomaltulose and erythritol;
   the polyol contained in the outer component of the outer coating differing from the polyol contained in the inner component of the outer coating.

2. A dual composition chewing gum as claimed in Claim 1, wherein the inner component layers of the outer coating comprise lactitol, maltitol or hydrogenated isomaltulose, and the outer component layers of the outer coating comprise erythritol.

3. A dual composition chewing gum as claimed in Claim 1 or Claim 2, wherein the gum base includes an elastomer selected from the group consisting of polyisobutylene, isobutylene-isoprene copolymer, styrene butadiene rubber, natural latexes, and combinations thereof.

4. A dual composition chewing gum as claimed in any of Claims 1 to 3, wherein the gum base includes a resin selected from the group consisting of polyvinyl acetate, terpene resins, ester gums, and combinations thereof.

5. A dual composition chewing gum as claimed in any of Claims 1 to 4, wherein the gum base includes fats and oils selected from the group consisting of animal fats, vegetable oils, hydrogenated vegetable oils, partially hydrogenated vegetable oils, cocoa butter, and combinations thereof.

6. A dual composition chewing gum as claimed in any of Claims 1 to 5, wherein the gum base includes a wax selected from the group consisting of paraffin wax, microcrystalline wax, candelilla, carnauba, polyethylene wax, and combinations thereof.

7. A dual composition chewing gum as claimed in any of Claims 1 to 6, wherein the gum base includes a filler component selected from the group consisting of calcium carbonate, magnesium carbonate, talc, dicalcium phosphate, and combinations thereof.

8. A dual composition chewing gum as claimed in any of Claims 1 to 7, wherein the gum base includes a oftener selected from the group consisting of glycerol monostearate, glycerol triacetate, and combinations thereof.

9. A dual composition chewing gum as claimed in any of Claims 1 to 8, wherein at least one of the layers of the hard outer coating include at least about 90% polyol, by weight.

10. A dual composition chewing gum as claimed in any of claims 1 to 9, wherein the inner component layers of the hard outer coating include at least about 90%, by weight, of a polyol selected from the group consisting of lactitol, maltitol and hydrogenated isomaltulose.

11. A dual composition chewing gum as claimed in any of Claims 1 to 10, wherein the outer layers of the hard outer coating include at least about 90%, by weight, of erythritol.

12. A dual composition chewing gum as claimed in any of claims 1 to 11, wherein the bulk portion includes a sugarless sweetener selected from the group consisting of sorbitol, mannitol, xylitol, hydrogenated starch hydrolysates, lactitol, maltitol, erythritol, hydrogenated isomaltulose, and combinations thereof.

13. A dual composition chewing gum as claimed in any of Claims 1 to 12, wherein the bulk portion includes a high intensity sweetener selected from the group consisting of Sucralose®, aspartame, salts of acesulfame, alitame, saccharin and its salts, cyclamic acid and its salts, glycyrrhizin, dihydrochalcones, thaumatin, monellin, and combinations thereof.

14. A dual composition chewing gum as claimed in any of claims 1 to 13, wherein the gum center constitutes from 50 to 80 weight percent of the dual composition hard coated chewing gum and the outer coating constitutes from 20 to 50 weight percent of A dual composition hard coated chewing gum.

15. A dual composition chewing gum as claimed in any of Claims 1 to 14, wherein the layers of the hard outer coating each include at least about 90% of at least two polyols selected from the group consisting of lactitol, maltitol, hydrogenated isomaltulose and erythritol.

16. A dual composition chewing gum as claimed in any of Claims 1 to 15, wherein the inner layers of the hard outer coating include at least about 90% lactitol, maltitol or hydrogenated isomaltulose, by weight; and wherein the outer layers of the hard outer coating include at least about 90% erythritol, by weight.

17. A method of forming a dual composition hard coated chewing gum, comprising the steps of:

(a) forming a gum center including a bulk portion, a chewing gum base portion and one or more flavoring agents;
(b) forming a first polyol liquid coating syrup comprising solvent and from 50% to the point of saturation of a first polyol selected from the group consisting of lactitol, maltitol, hydrogenated isomaltulose and erythritol, by weight of the polyol liquid coating syrup;
(c) applying a plurality of coats of the first polyol liquid coating syrup to the gum center;
(d) forming a second polyol liquid coating syrup comprising solvent and from 50% to the point of saturation of a second polyol selected from the group consisting of lactitol, maltitol, hydrogenated isomaltulose and erythritol, by weight of the polyol liquid coating syrup, the composition of the second polyol liquid coating syrup differing from the composition of the first polyol liquid coating syrup;
(e) applying a plurality of coats of the second polyol liquid coating syrup to the gum center which is coated with the first polyol; and
(f) evaporating the solvent from each coat of the first and second polyol liquid coating syrups, prior to applying the next coat;

the number of coats applied in steps (c) and (e) being sufficient to provide a coating of from 10 to 65 weight percent of the total coated chewing gum product, constituting an inner component of the outer coating and an outer component of the outer coating;

the layers of the inner component of the outer coating comprising a first polyol selected from the group consisting of lactitol, maltitol, hydrogenated isomaltulose and erythritol;

the layers of the outer component of the outer coating comprising a second polyol selected from the group consisting of lactitol, maltitol, hydrogenated isomaltulose and erythritol;

the polyol contained in the outer component of the outer coating differing from the polyol contained in the inner component of the outer coating.

18. A method as claimed in Claim 17 wherein the first and second liquid coating syrups each comprise at least about 30% polyol, by weight of the respective liquid coating syrup.

19. A method as claimed in Claim 17 or 18, wherein the liquid coating syrup further comprises a flavoring agent.

20. A method as claimed in any of Claims 17 to 19, wherein the liquid coating syrup further comprises a whitener.

21. A method as claimed in any of Claims 17 to 20, wherein the liquid coating syrup further comprises an artificial sweetener.

22. A method as claimed in any of Claims 17 to 21, wherein the liquid coating syrup is applied to the chewing gum center by spraying.

23. A method as claimed in any of Claims 17 to 22, wherein the solvent for the liquid coating syrup comprises water.

24. A method as claimed in any of Claims 17 to 23, wherein layers of the hard outer coating include at least two polyols selected from the group consisting of lactitol, maltitol, hydrogenated isomaltulose and erythritol.

25. A method as claimed in any one of Claims 17 to 24, wherein layers of polyol coating containing at least one polyol selected from the group consisting of lactitol, maltitol and hydrogenated isomaltulose are applied before layers of coating containing erythritol.

**Patentansprüche**

1. Kaugummi mit einem harten Zwei-Komponenten-Überzug, der umfaßt

   35 bis 90 Gew.-% eines Gummikerns, enthaltend einen Quellmittel- bzw. Füllmittelanteil, eine Kaugummibase und einen oder mehrere Geschmacksstoffe; und

   10 bis 65 Gew.-% eines äußeren Überzugs, der 50 bis 100 Gew.-% Polyole enthält, ausgewählt aus der Gruppe, die besteht aus Lactit, Maltit, hydrierter Isomaltulose und Erythrit, und mindestens zwei aufeinanderfolgende Schichten mit jeweils 50 bis 100 Gew.-% eines Polyols, ausgewählt aus der Gruppe, die besteht aus Lactit, Maltit, hydrierter Isomaltulose und Erythrit, umfaßt;

   wobei die Schichten eine innere Komponente des äußeren Überzugs und eine äußere Komponente des äußeren Überzugs darstellen;

   die Schichten der inneren Komponente des äußeren Überzugs ein erstes Polyol umfassen, ausgewählt aus der Gruppe, die besteht aus Lactit, Maltit, hydrierter Isomaltulose und Erythrit;

   die Schichten der äußeren Komponente des äußeren Überzugs ein zweites Polyol umfassen, ausgewählt aus der Gruppe, die besteht aus Lactit, Maltit, hydrierter Isomaltulose und Erythrit; und

   das in der äußeren Komponente des äußeren Überzugs enthaltene Polyol verschieden ist von dem in der inneren Komponente des äußeren Überzugs enthaltenen Polyol.

2. Kaugummi mit einem harten Zwei-Komponenten-Überzug nach Anspruch 1, worin die inneren Komponentenschichten des äußeren Überzugs Lactit, Maltit oder hydrierte Isomaltulose und die äußeren Komponentenschichten des äußeren Überzugs Erythrit umfassen.

3. Kaugummi mit einem harten Zwei-Komponenten-Überzug nach Anspruch 1 oder 2, worin die Gummibase ein Elastomer enthält, ausgewählt aus der Gruppe, die besteht aus Polyisobutylen, Isobutylen/Isopren-Copolymer, Styrol-Butadien-Kautschuk, natürlichen Latices und Kombinationen davon.

4. Kaugummi mit einem harten Zwei-Komponenten-Überzug nach einem der Ansprüche 1 bis 3, worin die Gummibase ein Harz enthält, ausgewählt aus der Gruppe, die besteht aus Polyvinylacetat, Terpenharzen, Estergummis und Kombinationen davon.

5. Kaugummi mit einem harten Zwei-Komponenten-Überzug nach einem der Ansprüche 1 bis 4, worin die Gummibase Fette und Öle enthält, ausgewählt aus der Gruppe, die besteht aus tierischen Fetten, pflanzlichen Ölen, hydrierten pflanzlichen Ölen, teilweise hydrierten pflanzlichen Ölen, Kakaobutter und Kombinationen davon.

6. Kaugummi mit einem harten Zwei-Komponenten-Überzug nach einem der Ansprüche 1 bis 5, worin die Gummibase ein Wachs enthält, ausgewählt aus der Gruppe, die besteht aus Paraffinwachs, mikrokristallinem Wachs, Candelillawachs, Carnaubawach, Polyethylenwachs und Kombinationen davon.

7. Kaugummi mit einem harten Zwei-Komponenten-Überzug nach einem der Ansprüche 1 bis 6, worin die Gummibase eine Füllstoff-Komponente enthält, ausgewählt aus der Gruppe, die besteht aus Calciumcarbonat, Magnesiumcarbonat, Talk, Dicalciumphosphat und Kombinationen davon.

8. Kaugummi mit einem harten Zwei-Komponenten-Überzug nach einem der Ansprüche 1 bis 7, worin die Gummibase einen Weichmacher enthält ausgewählt aus der Gruppe, die besteht aus Glycerinmonostearat, Glycerintriacetat und Kombinationen davon.

9. Kaugummi mit einem harten Zwei-Komponenten-Überzug nach einem der Ansprüche 1 bis 8, worin mindestens eine der Schichten des harten äußeren Überzug mindestens etwa 90 Gew.-% Polyol enthält.

10. Kaugummi mit einem harten Zwei-Komponenten-Überzug nach einem der Ansprüche 1 bis 9, worin die inneren Komponentenschichten des harten äußeren Überzugs mindestens etwa 90 Gew.-% eines Polyols enthalten, ausgewählt aus der Gruppe, die besteht aus Lactit, Maltit und hydrierter Isomaltulose.

11. Kaugummi mit einem harten Zwei-Komponenten-Überzug nach einem der Ansprüche 1 bis 10, worin die äußeren Schichten des harten äußeren Überzugs mindestens etwa 90 Gew.-% Erythrit enthalten.

12. Kaugummi mit einem harten Zwei-Komponenten-Überzug nach einem der Ansprüche 1 bis 11, worin der Quellmittel- bzw. Füllmittelanteil ein zuckerfreies Süßungsmittel enthält, ausgewählt aus der Gruppe, die besteht aus Sorbit, Mannit, Xylit, hydrierten Stärkehydrolysaten, Lactit, Maltit, Erythrit, hydrierter Isomaltulose und Kombinationen davon.

13. Kaugummi mit einem harten Zwei-Komponenten-Überzug nach einem der Ansprüche 1 bis 12, worin der Quellmittel- bzw. Füllmittelanteil ein Süßungsmittel mit hoher Süßkraft enthält, ausgewählt aus der Gruppe, die besteht aus Sucralose®, Aspartam, Acesulfam-Salzen, Alitam, Saccharin und Salzen davon, Cyclaminsäure und ihren Salzen, Glycyrrhizin, Dihydrochalconen, Thaumatin, Monellin und Kombinationen davon.

14. Kaugummi mit einem harten Zwei-Komponenten-Überzug nach einem der Ansprüche 1 bis 13, worin der Gummikern 50 bis 80 Gew.-% des Kaugummis mit einem harten Zwei-Komponenten-Überzug ausmacht und der äußere Überzug 20 bis 50 Gew.-% des Kaugummis mit einem harten Zwei-Komponenten-Überzugs ausmacht.

15. Kaugummi mit einem harten Zwei-Komponenten-Überzug nach einem der Ansprüche 1 bis 14, worin die Schichten des harten äußeren Überzugs jeweils mindestens etwa 90 % von mindestens zwei Polyolen enthalten, ausgewählt aus der Gruppe, die besteht aus Lactit, Maltit, hydrierter Isomaltulose und Erythrit.

16. Kaugummi mit einem harten Zwei-Komponenten-Überzug nach einem der Ansprüche 1 bis 15, worin die inneren Schichten des harten äußeren Überzugs mindestens etwa 90 Gew.-% Lactit, Maltit oder hydrierte Isomaltulose enthalten und die äußeren Schichten des harten äußeren Überzug mindestens etwa 90 Gew.-% Erythrit enthalten.

**17.** Verfahren zur Herstellung eines Kaugummis mit einem harten Zwei-Komponenten-Überzug, das die Stufen umfaßt:

   a) Herstellung eines Gummikerns, der einen Quellmittel- bzw. Füllmittelanteil, einen Kaugummibasenanteil und einen oder mehrere Geschmacksstoffe enthält;
   b) Herstellung eines ersten flüssigen Polyol-Beschichtungssirups, der ein Lösungsmittel und ein erstes Polyol, ausgewählt aus der Gruppe, die besteht aus Lactit, Maltit, hydrierter Isomaltulose und Erythrit, in einer Menge von 50 Gew.-% bis zum Sättigungspunkt, bezogen auf das Gewicht des flüssigen Polyol-Beschichtungssirups, umfaßt;
   c) Aufbringen einer Vielzahl von Überzügen aus dem ersten flüssigen Polyol-Beschichtungssirup auf den Gummikern;
   d) Herstellung eines zweiten flüssigen Polyol-Beschichtungssirups, der ein Lösungsmittel und ein zweites Polyol, ausgewählt aus der Gruppe, die besteht aus Lactit, Maltit, hydrierter Isomaltulose und Erythrit, in einer Menge von 50 Gew.-% bis zum Sättigungspunkt, bezogen auf das Gewicht des flüssigen Polyol-Beschichtungssirups, umfaßt, wobei die Zusammensetzung des zweiten flüssigen Polyol-Beschichtungssirups von der Zusammensetzung des ersten flüssigen Polyol-Beschichtungssirups verschieden ist;
   e) Aufbringen einer Vielzahl von Überzügen aus dem zweiten flüssigen Polyol-Beschichtungssirup auf den Gummikern, der mit dem ersten Polyol beschichtet worden ist; und
   f) Verdampfen des Lösungsmittels aus jedem Überzug aus den ersten und zweiten flüssigen Polyol-Beschichtungssirupen vor dem Aufbringen des nächsten Überzugs;
   wobei die Anzahl der in den Stufen (c) und (e) aufgebrachten Überzüge ausreicht, um einen Überzug zu ergeben, der 10 bis 65 Gew.-% des gesamten beschichteten Kaugummi-Produkts ausmacht, und die darstellen eine innere Komponente des äußeren Überzugs und eine äußere Komponente des äußeren Überzugs;
   wobei die Schichten der inneren Komponente des äußeren Überzugs ein erstes Polyol umfassen, ausgewählt aus der Gruppe, die besteht aus Lactit, Maltit, hydrierter Isomaltulose und Erythrit;
   die Schichten der äußeren Komponente des äußeren Überzugs ein zweites Polyol umfassen, ausgewählt aus der Gruppe, die besteht aus Lactit, Maltit, hydrierter Isomaltulose und Erythrit, und
   wobei das in der äußeren Komponente des äußeren Überzugs enthaltene Polyol von dem in der inneren Komponente des äußeren Überzugs enthaltenen Polyol verschieden ist.

**18.** Verfahren nach Anspruch 17, worin der erste und der zweite flüssige Beschichtungssirup jeweils mindestens etwa 30 Gew.-% Polyol, bezogen auf das Gewicht des jeweiligen flüssigen Beschichtungssirups, umfassen.

**19.** Verfahren nach Anspruch 17 oder 18, worin der flüssige Beschichtungssirup außerdem einen Geschmacksstoff enthält.

**20.** Verfahren nach einem der Ansprüche 17 bis 19, worin der flüssige Reschichtungssirup außerdem einen Aufheller (Weißmacher) enthält.

**21.** Verfahren nach einem der Ansprüche 17 bis 20, worin der flüssige Beschichtungssirup außerdem ein künstliches Süßungsmittel enthält.

**22.** Verfahren nach einem der Ansprüche 17 bis 21, worin der flüssige Beschichtungssirup durch Aufsprühen auf den Kaugummikern aufgebracht wird.

**23.** Verfahren nach einem der Ansprüche 17 bis 22, worin das Lösungsmittel für den flüssigen Beschichtungssirup Wasser umfaßt.

**24.** Verfahren nach einem der Ansprüche 17 bis 23, worin die Schichten des harten äußeren Überzugs mindestens zwei Polyole enthalten, ausgewählt aus der Gruppe, die besteht aus Lactit, Maltit, hydrierter Isomaltulose und Erythrit.

**25.** Verfahren nach einem der Ansprüche 17 bis 24, worin die Schichten des Polyol-Überzugs, der mindestens ein Polyol, ausgewählt aus der Gruppe, die besteht aus Lactit, Maltit und hydrierter Isomaltulose, enthält, vor den Schichten des Erythrit enthaltenden Überzugs aufgebracht werden.

**Revendications**

1. Gomme à mâcher à enrobage dur à deux composants, comprenant :

   de 35 à 90 % en poids d'une partie centrale de gomme, y compris une partie de charge, une base de gomme à mâcher et un ou plusieurs agents aromatisants ; et
   de 10 à 65 % en poids d'un enrobage externe contenant de 50 à 100 % en poids de polyols choisis dans l'ensemble constitué par le lactitol, le maltitol, l'isomaltulose hydrogéné et l'érythritol, qui comprend au moins deux couches successives contenant chacune de 50 à 100 % en poids d'un polyol choisi dans l'ensemble constitué par le lactitol, le maltitol, l'isomaltulose hydrogéné et l'érythritol ;
   les couches constituant un composant interne de l'enrobage externe et un composant externe de l'enrobage externe ;
   les couches du composant interne de l'enrobage externe comprenant un premier polyol choisi dans l'ensemble constitué par le lactitol, le maltitol, l'isomaltulose hydrogéné et l'érythritol ;
   les couches du composant externe de l'enrobage externe comprenant un second polyol choisi dans l'ensemble constitué par le lactitol, le maltitol, l'isomaltulose hydrogéné et l'érythritol ;
   le polyol contenu dans le composant externe de l'enrobage externe étant différent du polyol contenu dans le composant interne de l'enrobage externe.

2. Gomme à mâcher à deux composants selon la revendication 1, dans laquelle les couches de composant interne de l'enrobage externe comprennent du lactitol, du maltitol ou de l'isomaltulose hydrogéné, et les couches de composant externe de l'enrobage externe comprennent de l'érythritol.

3. Gomme à mâcher à deux composants selon la revendication 1 ou la revendication 2, dans laquelle la base de gomme comprend un élastomère choisi dans l'ensemble constitué par le polyisobutylène, un copolymère d'isobutylèneisoprène, un caoutchouc de styrène-butadiène, des latex naturels et des combinaisons de ceux-ci.

4. Gomme à mâcher à deux composants selon l'une quelconque des revendications 1 à 3, dans laquelle la base de gomme comprend une résine choisie dans l'ensemble constitué par l'acétate de polyvinyle, les résines terpéniques, les gommes-esters et des combinaisons de ceux-ci.

5. Gomme à mâcher à deux composants selon l'une quelconque des revendications 1 à 4, dans laquelle la base de gomme comprend des graisses et des huiles choisies dans l'ensemble constitué par des graisses animales, des huiles végétales, des huiles végétales hydrogénées, des huiles végétales partiellement hydrogénées, le beurre de cacao et des combinaisons de ceux-ci.

6. Gomme à mâcher à deux composants selon l'une quelconque des revendications 1 à 5, dans laquelle la base de gomme comprend une cire choisie dans l'ensemble constitué par la cire de paraffine, la cire microcristalline, la cire de candelilla, la cire de carnauba, la cire de polyéthylène et des combinaisons de celles-ci.

7. Gomme à mâcher à deux composants selon l'une quelconque des revendications 1 à 6, dans laquelle la base de gomme comprend un composant de charge choisi dans l'ensemble constitué par le carbonate de calcium, le carbonate de magnésium, le talc, le phosphate dicalcique et des combinaisons de ceux-ci.

8. Gomme à mâcher à deux composants selon l'une quelconque des revendications 1 à 7, dans laquelle la base de gomme comprend un émollient choisi dans l'ensemble constitué par le monostéarate de glycérol, le triacétate de glycérol et des combinaisons de ceux-ci.

9. Gomme à mâcher à deux composants selon l'une quelconque des revendications 1 à 8, dans laquelle au moins une des couches de l'enrobage externe dur comprend au moins environ 90 % en poids de polyol.

10. Gomme à mâcher à deux composants selon l'une quelconque des revendications 1 à 9, dans laquelle les couches de composant interne de l'enrobage externe dur comprennent au moins environ 90 % en poids d'un polyol choisi dans l'ensemble constitué par le lactitol, le maltitol et l'isomaltulose hydrogéné.

11. Gomme à mâcher à deux composants selon l'une quelconque des revendications 1 à 10, dans laquelle les couches externes de l'enrobage externe dur comprennent au moins environ 90 % en poids d'érythritol.

**12.** Gomme à mâcher à deux composants selon l'une quelconque des revendications 1 à 11, dans laquelle la partie de charge comprend un édulcorant sans sucre choisi dans l'ensemble constitué par le sorbitol, le mannitol, le xylitol, des hydrolysats hydrogénés d'amidon, le lactitol, le maltitol, l'érythritol, l'isomaltulose hydrogéné et des combinaisons de ceux-ci.

**13.** Gomme à mâcher à deux composants selon l'une quelconque des revendications 1 à 12, dans laquelle la partie de charge comprend un édulcorant d'intensité élevée choisi dans l'ensemble constitué par le Sucralose®, l'aspartame, des sels d'acésulfame, l'alitame, la saccharine et ses sels, l'acide cyclamique et ses sels, la glycyrrhizine, les dihydrochalcones, la thaumatine, la monelline et des combinaisons de ceux-ci.

**14.** Gomme à mâcher à deux composants selon l'une quelconque des revendications 1 à 13, dans laquelle la partie centrale de la gomme constitue de 50 à 80 % en poids de la gomme à mâcher à enrobage dur à deux composants, et l'enrobage externe constitue de 20 à 50 % en poids de la gomme à mâcher à enrobage dur à deux composants.

**15.** Gomme à mâcher à deux composants selon l'une quelconque des revendications 1 à 14, dans laquelle les couches de l'enrobage externe dur comprennent chacune au moins environ 90 % d'au moins deux polyols choisis dans l'ensemble constitué par le lactitol, le maltitol, l'isomaltulose hydrogéné et l'érythritol.

**16.** Gomme à mâcher à deux composants selon l'une quelconque des revendications 1 à 15, dans laquelle les couches internes de l'enrobage externe dur comprennent au moins environ 90 % en poids de lactitol, de maltitol ou d'isomaltulose hydrogéné ; et dans laquelle les couches externes de l'enrobage externe dur comprennent au moins environ 90 % en poids d'érythritol.

**17.** Procédé de formation d'une gomme à mâcher à enrobage dur à deux composants, comprenant les étapes consistant à :

(a) former une partie centrale de gomme comprenant une partie de charge, une partie de base de gomme à mâcher et un ou plusieurs agents aromatisants ;
(b) former un premier sirop liquide d'enrobage à base de polyol, comprenant un solvant et entre 50 % en poids et le point de saturation, par rapport au sirop liquide d'enrobage à base de polyol, d'un premier polyol choisi dans l'ensemble constitué par le lactitol, le maltitol, l'isomaltulose hydrogéné et l'érythritol ;
(c) appliquer une pluralité de couches du premier sirop liquide d'enrobage à base de polyol sur la partie centrale de la gomme ;
(d) former un second sirop liquide d'enrobage à base de polyol, comprenant un solvant et entre 50 % en poids et le point de saturation, par rapport au sirop liquide d'enrobage à base de polyol, d'un second polyol choisi dans l'ensemble constitué par le lactitol, le maltitol, l'isomaltulose hydrogéné et l'érythritol, la composition du second sirop liquide d'enrobage à base de polyol étant différente de la composition du premier sirop liquide d'enrobage à base de polyol ;
(e) appliquer une pluralité de couches du second sirop liquide d'enrobage à base de polyol sur la partie centrale de la gomme qui est enrobée du premier polyol ; et
(f) évaporer le solvant de chaque couche des premier et second sirops liquides d'enrobage à base de polyol avant d'appliquer la couche suivante ;
le nombre de couches appliquées pendant les étapes (c) et (e) étant suffisant pour fournir un enrobage constituant de 10 à 65 % en poids du produit total gomme à mâcher enrobée, et constituant un composant interne de l'enrobage externe et un composant externe de l'enrobage externe ;
les couches de composant interne de l'enrobage externe comprenant un premier polyol choisi dans l'ensemble constitué par le lactitol, le maltitol, l'isomaltulose hydrogéné et l'érythritol ;
les couches de composant externe de l'enrobage externe comprenant un second polyol choisi dans l'ensemble constitué par le lactitol, le maltitol, l'isomaltulose hydrogéné et l'érythritol ;
le polyol contenu dans le composant externe de l'enrobage externe étant différent du polyol contenu dans le composant interne de l'enrobage externe.

**18.** Procédé selon la revendication 17, dans lequel les premier et second sirops liquides d'enrobage constituent chacun au moins environ 30 % en poids de polyol par rapport au sirop liquide d'enrobage respectif.

**19.** Procédé selon la revendication 17 ou 18, dans lequel le sirop liquide d'enrobage comprend, en outre, un agent aromatisant.

**20.** Procédé selon l'une quelconque des revendications 17 à 19, dans lequel le sirop liquide d'enrobage comprend, en outre, un agent de blanchiment.

**21.** Procédé selon l'une quelconque des revendications 17 à 20, dans lequel le sirop liquide d'enrobage comprend, en outre, un édulcorant artificiel.

**22.** Procédé selon l'une quelconque des revendications 17 à 21, dans lequel on applique le sirop liquide d'enrobage sur la partie centrale de la gomme à mâcher par pulvérisation.

**23.** Procédé selon l'une quelconque des revendications 17 à 22, dans lequel le solvant pour le sirop liquide d'enrobage comprend de l'eau.

**24.** Procédé selon l'une quelconque des revendications 17 à 23, dans lequel des couches de l'enrobage externe dur comprennent au moins deux polyols choisis dans l'ensemble constitué par le lactitol, le maltitol, l'isomaltulose hydrogéné et l'érythritol.

**25.** Procédé selon l'une quelconque des revendications 17 à 24, dans lequel des couches d'enrobage à base de polyol contenant au moins un polyol choisi dans l'ensemble constitué par le lactitol, le maltitol et l'isomaltulose hydrogéné sont appliquées avant les couches d'enrobage contenant de l'érythritol.